# EUROPÄISCHE PATENTSCHRIFT

(11) **EP 2 655 925 B1**
(45) Veröffentlichungstag und Bekanntmachung des Hinweises auf die Patenterteilung: **08.07.2015**
(21) Anmeldenummer: 11808842.6
(22) Anmeldetag: 14.12.2011
(51) Int. Cl.: F16H 3/00, F16H 3/093, F16H 57/033

(54) **VERFAHREN ZUR MODIFIZIERUNG EINES SCHALTGETRIEBES**
METHOD FOR MODIFYING A MANUAL TRANSMISSION
PROCÉDÉ POUR LA MODIFICATION D'UNE BOÎTE DE VITESSES MANUELLE

(30) Priorität: 22.12.2010 DE 102010055735
(43) Veröffentlichungstag der Anmeldung: 30.10.2013
(73) Patentinhaber: Getrag Ford Transmissions GmbH, 50735 Köln (DE)
(72) Erfinder: CHAZOTTE, Jean-Pierre, 50226 Frechen (DE)
(86) Internationale Anmeldenummer: PCT/EP2011/072712
(87) Internationale Veröffentlichungsnummer: WO 2012/084631

(56) Entgegenhaltungen:
- EP-A1- 1 424 509
- EP-A1- 2 060 827

## Beschreibung

Die Erfindung betrifft ein Verfahren zur Modifizierung eines Schaltgetriebes für Kraftfahrzeuge, so dass auf der Basis einer ersten Getriebevariante eine zweite Getriebevariante entsteht.

Ein derartiges Verfahren kann der EP 1 424 509 A1 entnommen werden. Die in dieser Druckschrift offenbarten Getriebevarianten weisen jeweils eine Eingangswelle mit Festrädem sowie eine erste Ausgangswelle und eine zweite Ausgangswelle auf, auf denen Losräder angeordnet sind. Die Losräder auf den Ausgangswellen kämmen mit zugeordneten Festrädern auf der Eingangswelle. Jedem Losrad ist dabei eine Gangstufe des Schaltgetriebes zugeordnet. Bei den Getriebevarianten handelt es sich dabei um Schaltgetriebe mit sechs Vorwärtsgängen und einem Rückwärtsgang, so dass insgesamt sieben Gangstufen zur Verfügung stehen.

Die Getriebevarianten der EP 1 424 509 A1 weisen jeweils eine Abhängigkeit auf. Eine Abhängigkeit wird gebildet, indem zwei Losräder mit einem gleichen Festrad kämmen. Zwar lässt sich durch eine Abhängigkeit ein Festrad einsparen, und grundsätzlich die axiale Baulänge des Schaltgetriebes klein halten, doch schränkt eine Abhängigkeit die Möglichkeiten ein, die Übersetzungsverhältnisse der Gangstufen des Schaltgetriebes nach Wunsch festzulegen bzw. zu ändern.

Um den konstruktiven Aufwand zur Modifizierung eines Schaltgetriebes, beispielsweise eine Neufestlegung der Übersetzungsverhältnisse der einzelnen Gangstufen, gering zu halten, schlägt die EP 1 424 509 A1 vor, auf der Basis der ersten Getriebevariante für die zweite Getriebevariante die Abhängigkeit an der gleichen Position zu belassen, jedoch die Durchmesser der in der Abhängigkeit befindlichen Zahnräder zu ändern, um so die Übersetzungsverhältnisse der Gangstufen, welche den Losrädern der Abhängigkeit zugeordnet sind, zu verändern. Zudem werden nicht nur die Übersetzungsverhältnisse in der Abhängigkeit geändert, sondern es werden den Losrädern auch andere Gangstufen des Schaltgetriebes zugeordnet. Gleichwohl diese Lösung mit vergleichsweise geringem Aufwand zu einer neuen Getriebevariante mit neuen Übersetzungsverhältnissen führt, sind durch die ansonsten unveränderte Getriebegeometrie der Auswahl neuer Übersetzungsverhältnisse Grenzen gesetzt.

Die DE 100 39 835 A1 offenbart ein Gehäuse für ein Kraftfahrzeuggetriebe in Vorgelegewellenbauweise, wobei eine Eingangswelle und eine Ausgangswelle koaxial angeordnet sind. Das Gehäuse ist dabei derart ausgebildet, dass Lagerstellen für die Aufnahme der Vorgelegewelle in ihrer Position verändert werden können, so dass sich für verschiedene Varianten unterschiedliche Achsabstände zwischen den koaxialen Eingangswelle und Ausgangswelle einerseits und der Vorgelegewelle andererseits hergestellt werden können. Durch die neue Position der Vorgelegewelle werden jedoch bei dem Getriebe mit koaxialer Eingangs- und Ausgangswelle die Übersetzungsverhältnisse aller Gangstufen geändert, so dass für jede Gangstufe die entsprechende Zahnradpaarung neu festgelegt und hinsichtlich Festigkeitskriterien neu durchgerechnet werden muss. Das Dokument EP 2 060 827 A1 bildet den nächstliegenden Stand der Technik und offenbart alle Merkmale des Oberbegriffs des Anspruchs 1.

Der Erfindung liegt die Aufgabe zugrunde, ein Verfahren zur Modifizierung eines Schaltgetriebes für Kraftfahrzeuge bereitzustellen, welches eine Eingangswelle und mindestens zwei Ausgangswellen aufweist. Durch das bereitzustellende Verfahren soll sich eine neue Getriebevariante mit neuen Übersetzungsverhältnissen hervorbringen lassen, wobei dafür der konstruktive Aufwand und die mit der Modifizierung einhergehenden Kosten möglichst gering gehalten werden sollen.

Die der Erfindung zugrunde liegende Aufgabe wird mit dem Verfahren gemäß Anspruch 1 gelöst. Bevorzugte Ausführungsbeispiele können den Unteransprüchen entnommen werden.

Das Verfahren gemäß Anspruch 1 zeichnet sich dadurch aus, dass ausgehend von der ersten Getriebevariante für die zweite Getriebevariante ein Achsabstand zwischen Eingangswelle und zweiter Ausgangswelle verändert wird, während ein Achsabstand zwischen Eingangswelle und erster Ausgangswelle konstant gehalten wird. Die Änderung des Achsabstandes zwischen Eingangswelle und einer der Ausgangswellen betrifft somit nur einen Teil der Gangstufen des Schaltgetriebes, nämlich nur die Gangstufen, die den Losrädern der Ausgangswelle zugeordnet sind, die ihren Achsabstand zur Eingangswelle verändert. Alle anderen Gangstufen bleiben zunächst durch die Maßnahme der Achsabstandsänderung erst einmal unberührt. Natürlich schließt dies nicht die Möglichkeit aus, dass im Zuge der Achsabstandsänderung zwischen Eingangswelle und zweiter Ausgangswelle auch die Gangstufen neu festgelegt werden, die den Losrädern der in ihrer Position unveränderten Ausgangswelle zugeordnet sind.

Wie oben bereits ausgeführt, ist jedem Losrad eine Gangstufe des Schaltgetriebes zugeordnet. Vorzugsweise lassen sich die Losräder jeweils durch Gangschaltkupplungen drehfest mit der ersten Ausgangswelle oder mit der zweiten Ausgangswelle verbinden. Ist eine Gangschaltkupplung nicht geschaltet, so ist das betreffende Losrad drehbar auf der ersten oder zweiten Ausgangswelle gelagert. Bei nicht geschalteter Gangschaltkupplung kann kein Drehmoment von dem Losrad auf die das Losrad tragende Welle übertragen werden.

Kann einem Losrad beispielsweise ein erster Gang zugeordnet werden, so ist das Losrad mit der entsprechenden Ausgangswelle fest verbunden, wenn der erste Gang eingelegt ist. Im Folgenden wird dieses Losrad auch vereinfacht als Losrad des ersten Ganges bezeichnet. Sinngemäß soll dies auch für alle anderen Gangstufen bzw. Gänge gelten.

In einem bevorzugten Ausführungsbeispiel verbleibt die Abhängigkeit an der gleichen Position. Dies bedeutet, dass sich die Abhängigkeit der zweiten Getriebevariante an der gleichen Stelle befindet wie die Abhängigkeit der ersten Getriebevariante. Somit besteht die Möglichkeit, den grundsätzlichen Aufbau des Radsatzes bei der Modifikation des Schaltgetriebes nicht zu verändern bzw. nur sehr gezielt zu verändern.

Vorzugsweise wird zumindest einem Losrad der Abhängigkeit für die zweite Getriebevariante eine andere Gangstufe zugeordnet. Ist beispielsweise einem Losrad in der ersten Getriebevariante ein fünfter Vorwärtsgang zugeordnet, so kann diesem Losrad in der zweiten Getriebevariante ein vierter, sechster oder siebter Vorwärtsgang zugeordnet werden. Somit ändern sich nicht nur die Übersetzungsverhältnisse in der Abhängigkeit, sondern auch die Zuordnung der Gangstufen zu den Losrädern, was eine deutlich andere Getriebeabstufung möglich macht.

In einem bevorzugten Ausführungsbeispiel weisen beide Getriebevarianten jeweils eine weitere Abhängigkeit auf, die bevorzugt ebenfalls an der gleichen Position verbleibt. Durch das Vorsehen einer weiteren Abhängigkeit lassen sich Schaltgetriebe mit besonders kleiner axialer Baulänge realisieren. Das Verbleiben dieser weiteren Abhängigkeit an gleicher Position lässt den grundsätzlichen Aufbau des Radsatzes des Schaltgetriebes unberührt.

Zumindest einem Losrad der weiteren Abhängigkeit kann für die zweite Getriebevariante eine andere Gangstufe zugeordnet werden. Dies eröffnet die Möglichkeit, für die zweite Getriebevariante eine völlig andere Getriebeabstufung bereitzustellen, obwohl der grundsätzliche Aufbau des Radsatzes des Schaltgetriebes gleich bleibt.

Ein Achsabstand zwischen der zweiten Ausgangswelle und einem Abtriebsrad, welches mit einem Ritzel auf der ersten Ausgangswelle und einem Ritzel auf der zweiten Ausgangswelle kämmt, kann konstant gehalten werden. Wird bei der zweiten Getriebevariante der Achsabstand zwischen Eingangswelle und zweiter Ausgangswelle gegenüber der ersten Getriebevariante vergrößert, so führt dies bei diesem Ausführungsbeispiel zu einem Verschwenken der zweiten Ausgangswelle um die Achse des Abtriebsrads von der Eingangswelle weg. Alternativ ist es jedoch möglich, dass auch der Achsabstand zwischen zweiter Ausgangswelle und Abtriebsrad verändert wird, was jedoch zur Folge hat, dass man das Ritzel der zweiten Ausgangswelle dem neuen Achsabstand zwischen zweiter Ausgangswelle und Abtriebsrad anpassen muss. Grundsätzlich wäre es auch möglich, den Durchmesser des Abtriebsrads zu verändern, was jedoch auch Einfluss auf das Zusammenwirken von Abtriebsrad und Ritzel der ersten Ausgangswelle hätte. Der Achsabstand zwischen Abtriebsrad und erster Ausgangswelle bleibt zweckmäßig für alle Getriebevarianten gleich, so dass die Getriebevarianten auf einen gleichen Block, bestehend Eingangswelle, erster Ausgangswelle und Abtriebsrad, zurückgreifen können.

In einem bevorzugten Ausführungsbeispiel ist für beide Getriebevarianten ein Losrad, das dem ersten Vorwärtsgang zugeordnet ist, und ein Losrad, das einem zweiten Vorwärtsgang zugeordnet ist, auf der ersten Ausgangswelle vorgesehen. Der erste Vorwärtsgang gilt aufgrund der hohen auftretenden Kräfte an den Zähnen der beteiligten Zahnräder als festigkeitskritisch. Gleiches gilt für den zweiten Vorwärtsgang. Durch die Maßnahme, den ersten Vorwärtsgang und vorzugsweise auch den zweiten Vorwärtsgang unverändert zu belassen, wird der Aufwand für Festigkeitsberechnungen der zweiten Getriebevariante reduziert.

Die zweite Getriebevariante kann einen größeren Achsabstand zwischen Eingangswelle und zweiter Ausgangswelle als die erste Getriebevariante aufweisen, wobei bei der zweiten Getriebevariante dem in der einen Abhängigkeit befindlichen Losrad auf der zweiten Ausgangswelle ein höchster Vorwärtsgang des Schaltgetriebes zugeordnet wird, während bei der ersten Getriebevariante dem in der einen Abhängigkeit befindlichen Losrad auf der zweiten Ausgangswelle ein anderer, vom höchsten Vorwärtsgang verschiedener Vorwärtsgang, zugeordnet ist.

Die Begriffe "erste Getriebevariante" und "zweite Getriebevariante" sind so zu verstehen, dass sie miteinander vertauscht werden können. Beispielsweise könnte erfindungsgemäß so auf der Basis einer Getriebevariante mit Merkmalen, welche hier in Zusammenhang mit der zweiten Getriebevariante beschrieben werden, durch Modifikation eine Getriebevariante mit Merkmalen entstehen, welche hier in Zusammenhang mit der ersten Getriebevariante zu entnehmen sind.

Das Getriebe kann als Doppelkupplungsgetriebe mit einer weiteren Eingangswelle ausgebildet sein. Die eine Eingangswelle, die im Zusammenhang mit dem Doppelkupplungsgetriebe auch als erste Eingangswelle bezeichnet wird, und die weitere bzw. zweite Eingangswelle sind vorzugsweise koaxial angeordnet. Eine der Eingangswellen kann als Vollwelle, während die andere der Eingangswellen als Hohlwelle ausgebildet sein kann.

In einem bevorzugten Ausführungsbeispiel werden den in der einen Abhängigkeit befindlichen Losrädern für beide Getriebevarianten nur ungerade oder gerade Vorwärtsgänge zugeordnet. Weist beispielsweise die eine Abhängigkeit der ersten Getriebevariante die Losräder eines dritten und fünften Vorwärtsganges auf, so können diesen Losrädern in der zweiten Getriebevariante der fünfte Vorwärtsgang und ein siebter Vorwärtsgang zugeordnet werden. Gleiches kann alternativ oder zusätzlich für die weitere Abhängigkeit gelten. Auch hier können für beide Getriebevarianten nur ungerade oder gerade Vorwärtsgänge vorgesehen sein.

Das Getriebe kann eine Vielzahl von Vorwärtsgängen aufweisen. Beispielsweise können sechs, sieben oder acht Vorwärtsgänge realisiert sein. Vorzugsweise ist ein Rückwärtsgang vorgesehen. Es kann aber je nach Bedarf auch ein zweiter Rückwärtsgang realisiert sein.

Bei dem Ausführungsbeispiel mit sieben Vorwärtsgängen kann der einen Abhängigkeit in der ersten Getriebevariante ein dritter Vorwärtsgang und ein fünfter Vorwärtsgang zugeordnet sein, während bei der zweiten Getriebevariante den Losrädern der einen Abhängigkeit der fünfte Vorwärtsgang und der siebte Vorwärtsgang zugeordnet werden. Bei einem Getriebe mit acht Vorwärtsgängen kann in der ersten Getriebevariante den Losrädern der einen Abhängigkeit der dritte Vorwärtsgang und der fünfte Vorwärtsgang und den Losrädern der weiteren Abhängigkeit ein vierter Vorwärtsgang und ein sechster Vorwärtsgang zugeordnet sein, während bei der zweiten Getriebevariante den Losrädern der einen Abhängigkeit der fünfte Vorwärtsgang und der siebte Vorwärtsgang und den Losrädern der weiteren Abhängigkeit ein sechster Vorwärtsgang und ein achter Vorwärtsgang zugeordnet werden.

Anhand der Zeichnung soll die Erfindung näher erläutert werden. Es zeigen:
- Figur 1: in schematischer Darstellung ein Doppelkupplungsgetriebe;
- Figur 2: in schematischer Darstellung ein weiteres Doppelkupplungsgetriebe mit geändertem Radsatz; und
- Figur 3: schematisch einen Radsatz im Querschnitt.

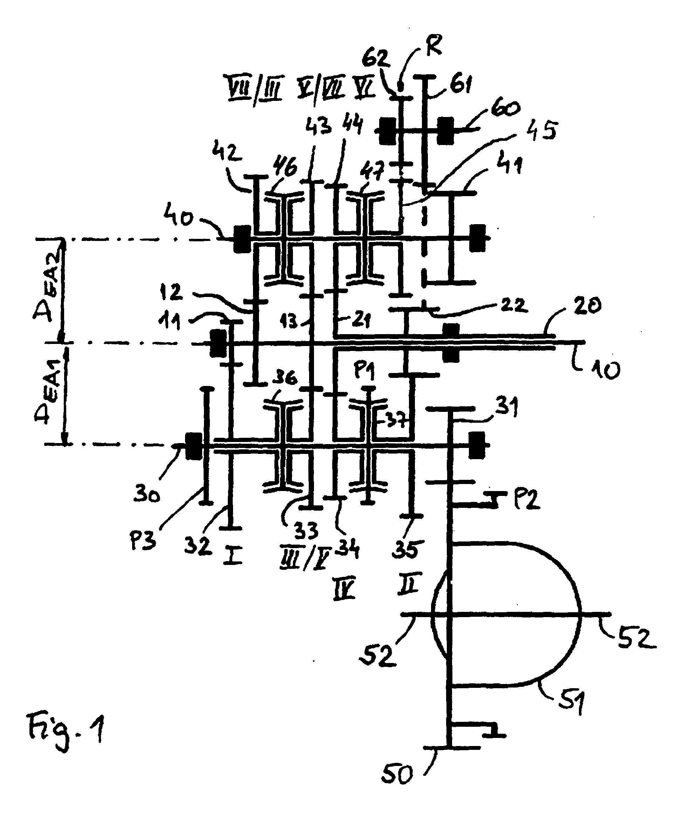

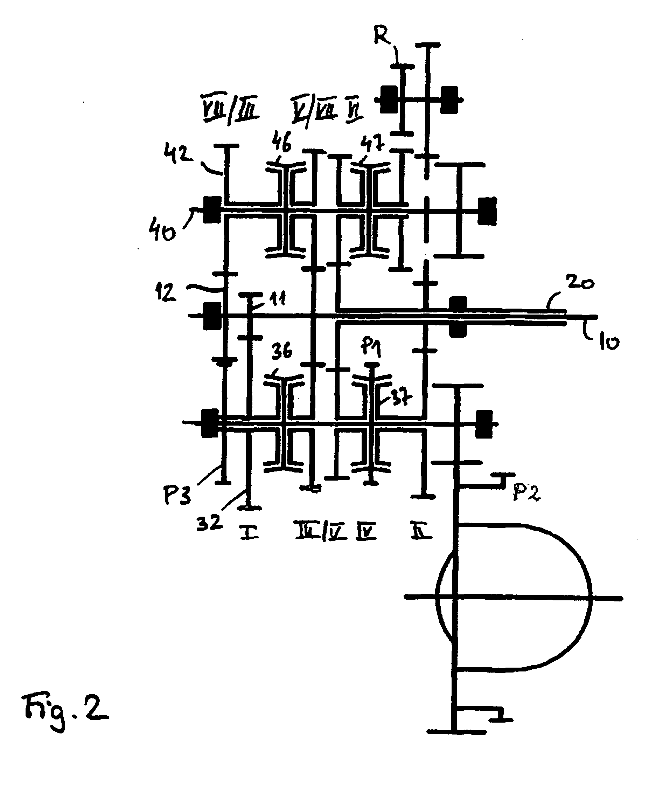

In der Figur 1 ist ein Doppelkupplungsgetriebe mit sieben Vorwärtsgängen I bis VII und einem Rückwärtsgang R schematisch dargestellt. Die folgenden Ausführungen beziehen sich zunächst nur auf das Doppelkupplungsgetriebe der Figur 1, gelten aber sinngemäß auch für das Doppelkupplungsgetriebe, welches in der Figur 2 dargestellt ist. Auf die Unterschiede zwischen dem Doppelkupplungsgetriebe der Figur 2 gegenüber dem Doppelkupplungsgetriebe der Figur 1 wird später eingegangen. Bauteile und Merkmale in Figur 2, die zu Bauteilen und Merkmalen der Figur 1 identisch sind, werden mit gleichen Bezugszeichen versehen.

Das Doppelkupplungsgetriebe der Figur 1 weist eine erste Eingangswelle 10 und eine zweite Eingangswelle 20 auf. Die erste Eingangswelle 10 ist als Vollwelle ausgebildet, während die zweite Eingangswelle 20 eine Hohlwelle ist, die koaxial zur ersten Eingangswelle 10 angeordnet ist. Somit weisen die Eingangswellen 10, 20 eine gemeinsame Drehachse auf. Parallel zu der ersten Eingangswelle 10 oder der zweiten Eingangswelle 20 sind eine erste Ausgangswelle 30 und eine zweite Ausgangswelle 40 angeordnet.

Die erste Ausgangswelle 30 ist über ein drehfest mit der ersten Ausgangswelle 30 verbundenen Zahnrad oder Ritzel 31 mit einem Ringrad oder Abtriebsrad 50 verbunden, welches an einem Differential 51 befestigt ist. Das Differential 51 teilt ein auf das Ringrad 50 übertragenes Drehmoment auf Achsen 52 eines hier nicht weiter dargestellten Kraftfahrzeugs auf. Die zweite Ausgangswelle 40 trägt entsprechend ein Ritzel 41, was in der Ebene des Ritzels 31 liegt und ebenfalls mit dem Abtriebsrad 50 kämmt. Eine Doppelkupplung, bestehend aus zwei Einzelkupplungen, ist in Figur 1 nicht dargestellt.

Auf der ersten Eingangswelle 10 sind drei Festräder 11, 12, 13 drehfest angeordnet, die, mit entsprechender Berücksichtigung der obigen Reihenfolge, mit Losrädern 32, 42 und 33, 43 kämmen. Entsprechend kämmt das auf der ersten Eingangswelle 10 sitzende Festrad 11 mit dem Losrad 32, welches auf der ersten Ausgangswelle 30 angeordnet ist. Das Festrad 12 kämmt mit dem Losrad 42 auf der zweiten Ausgangswelle 40. Das Festrad 13 kämmt sowohl mit dem Losrad 33 auf der ersten Ausgangswelle 30 als auch mit dem Losrad 43 auf der zweiten Ausgangswelle 40. Die letztgenannten Zahnräder (Losräder, Festräder) 13, 33, 43 bilden eine erste Abhängigkeit.

Die zweite Eingangswelle 20 trägt zwei Festräder 21, 22, die mit Losrädern 34, 44 und 35 kämmen. Dabei kämmt das Festrad 21 gleichzeitig mit den Losrädern 34 und 44, wodurch eine zweite Abhängigkeit gebildet ist. Das Festrad 22 kämmt nicht nur mit dem Losrad 45, sondern auch mit einem Festrad 61, das auf einer Zwischenwelle 60 drehfest angeordnet ist. Die Zwischenwelle 60 trägt ein weiteres Festrad 62, das mit einem auf der zweiten Ausgangswelle 40 sitzenden Losrad 45 kämmt. So ergibt sich eine dritte Abhängigkeit, die aus Festrad 22 und Losrädern 35, 45 einschließlich der zwischengeschalteten Festräder 61, 62 auf der Zwischenwelle 60 besteht. Dem Losrad 32 ist der erste Vorwärtsgang I zugeordnet. Dieser erste Vorwärtsgang I ist eingelegt, wenn eine Gangschaltkupplung 36 so geschaltet ist, dass sie das Losrad 32 drehfest mit der ersten Ausgangswelle 30 verbindet. In diesem Fall kann das Doppelkupplungsgetriebe ein Drehmoment von der ersten Eingangswelle 10 über das Festrad 11, das Losrad 32 auf die erste Ausgangswelle 30 übertragen, wobei letztlich über das Zahnrad 31 das Drehmoment zum Abtriebsrad 50 und somit zum Differential 51 gelangt. In einer anderen Schaltstellung verbindet die Gangschaltkupplung 36 das Losrad 33 drehfest mit der ersten Ausgangswelle 30, so dass dann die miteinander kämmenden Zahnräder 13, 33 einen Drehmomentfluss von der ersten Eingangswelle 10 über die erste Ausgangswelle 30 auf das Abtriebsrad 50 ermöglichen. Damit wäre in einer ersten Getriebevariante der dritte Vorwärtsgang III eingelegt.

In einer zweiten Getriebevariante ist dem Losrad 33 der fünfte Vorwärtsgang V zugeordnet. Die in der Figur 1 verwendete Kennzeichnung "III /V" soll also bedeuten, dass in der ersten Getriebevariante das Zahnrad 33 das Losrad des dritten Vorwärtsganges III darstellt, während es in der zweiten Getriebevariante das Losrad des fünften Vorwärtsgangs V darstellt. Auf die zweite Getriebevariante gemäß Figur 1 wird jedoch später noch näher eingegangen.

Neben der Gangschaltkupplung 36 weist das Doppelkupplungsgetriebe weitere Gangschaltkupplungen 37, 46 und 47 auf, durch die analog zur Gangschaltkupplung 36, jeweils zwei Losräder wahlweise drehfest mit der ersten Ausgangswelle 30 bzw. mit der zweiten Ausgangswelle 40 verbunden werden können. Jedem Losrad 34, 45, 42, 43, 44, 45 kann somit einer der Vorwärtsgänge II, IV bis VII bzw. ein Rückwärtsgang R zugeordnet werden. Ist beispielsweise über die Gangschaltkupplung 37 das Losrad 34 drehfest mit der ersten Ausgangswelle 30 verbunden, ist der vierte Vorwärtsgang IV eingelegt. Des Weiteren sei exemplarisch auf den Rückwärtsgang R eingegangen. Verbindet die Gangschaltkupplung 47 das Losrad 45 drehfest mit der zweiten Ausgangswelle 40, so führt der Drehmomentfluss von dem Festrad 22 auf der zweiten Ausgangswelle 20 auf das Festrad 61 der Zwischenwelle 60 (siehe gestrichelte Verbindung zwischen Festrad 22 und Festrad 61), von dort über die Zwischenwelle 60 auf das Festrad 62, welches mit dem nun geschalteten Losrad 45 kämmt. Das Drehmoment gelangt nun über das Ritzel 41 auf das Abtriebsrad 50 und über das Differential 51 auf die Achsen 52 des Kraftfahrzeugs.

Wie der Figur 1 zu entnehmen ist, können in der ersten Getriebevarianten der ersten Abhängigkeit, die aus den Zahnrädern 13, 33, 43 gebildet ist, somit der dritte Vorwärtsgang III und der fünfte Vorwärtsgang V zugeordnet werden. Der zweiten Abhängigkeit, welche aus dem Festrad 21 und den Losrädern 34, 44 besteht, werden der vierte Vorwärtsgang IV und der sechste Vorwärtsgang VI zugeordnet.

Wie oben bereits angedeutet, zeigt Figur 1 nicht nur die erste Getriebevariante, sondern auch die zweite Getriebevariante, zumindest deren geänderte Zuordnung der Vorwärtsgänge auf die einzelnen Losräder. In der zweiten Getriebevariante bleibt im Vergleich zur ersten Getriebevariante die Zuordnung der Vorwärtsgänge I, IV und II zu den Festrädern 32, 34 und 35 unverändert. Bei der ersten Abhängigkeit (Zahnräder 13, 33, 43) sind nun bei der zweiten Getriebevariante die Vorwärtsgänge V und VII verwirklicht. Vorwärtsgang III, der in der ersten Getriebevariante dem Losrad 33 zugeordnet ist, ist nun dem Losrad 42 auf der zweiten Ausgangswelle 40 zugeordnet.

Aus der Figur 1 wird nicht ersichtlich, dass für die beiden Getriebevarianten ein Achsabstand zwischen den koaxial angeordneten Eingangswellen 10, 20 und der zweiten Ausgangswelle 40 unterschiedlich groß ist. In der Figur 1 ist der Achsabstand zwischen den Eingangswellen 10, 20 und der zweiten Ausgangswelle 40 mit D_{EA2} gekennzeichnet. Ein Achsabstand zwischen den Eingangswellen 10, 20 und der ersten Ausgangswelle 30 ist mit D_{EA1} bezeichnet und ist für beide Getriebevarianten gleich. Figur 1 soll somit in erster Linie nur verdeutlichen, dass durch die unterschiedlichen Getriebevarianten unterschiedliche Zuordnungen der Gangstufen zu den einzelnen Losrädern realisiert werden. Diese unterschiedliche Zuordnung ermöglicht es, dass die Gangabstufungen der ersten Getriebevariante von den Abstufungen der zweiten Getriebevariante gänzlich unterschiedlich sein können. So ist es beispielsweise möglich, das Doppelkupplungsgetriebe der Figur 1 in seinen unterschiedlichen Getriebevarianten mit dem unterschiedlichen Achsabstand D_{EA2} zwischen Eingangswellen 10, 20 und zweiter Ausgangswelle 40 für einen Benzinmotor einerseits und einen Dieselmotor andererseits auszulegen.

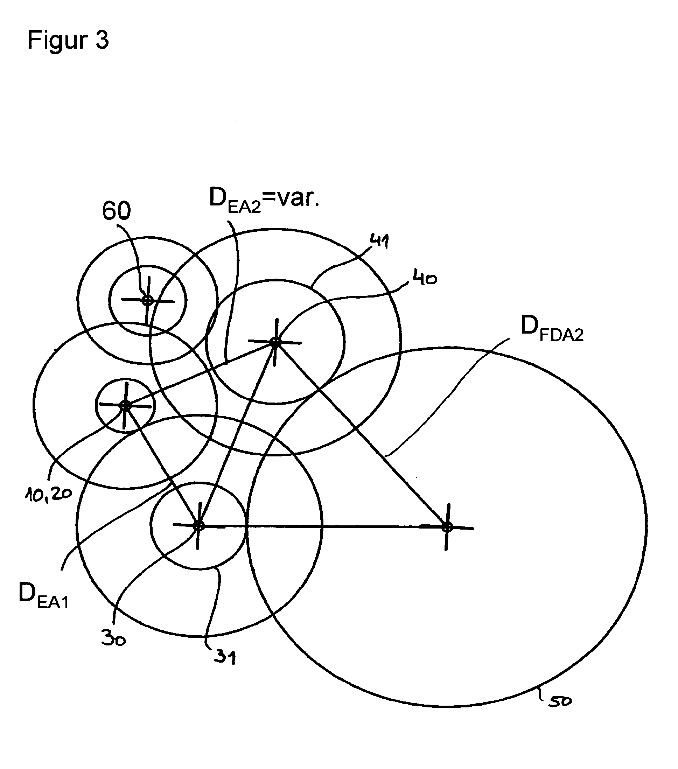

Der Figur 1 kann ebenfalls nicht entnommen werden, dass sich bei der geänderten Zuordnung der einzelnen Gangstufen in den unterschiedlichen Getriebevarianten sich auch die Durchmesser der betreffenden Losräder ändern (können). So ist in Figur 1 beispielsweise das Losrad 33 mit nur einem Durchmesser dargestellt, der aber für die beiden Getriebevarianten unterschiedlich groß sein kann. Auch ist darauf hinzuweisen, dass die Zahnräder mit ihren jeweiligen Durchmessern nur schematisch dargestellt sind. Figur 1 ist also nicht dafür geeignet, anhand der Durchmesser von Zahnrädern einer Zahnradpaarung auf das Übersetzungsverhältnis dieser Zahnradpaarung zu schließen, sei es im Hinblick auf den Betrag oder im Hinblick auf einen Vergleich zu Übersetzungsverhältnissen anderer Zahnradpaarungen. Vielmehr soll lediglich der grundsätzliche Aufbau des Getriebes beschrieben werden: Es handelt sich um ein Getriebe mit wenigstens einer Eingangswelle, zu der parallel beabstandet eine erste Ausgangswelle und eine zweite Ausgangswelle vorgesehen sind. Die Achsen der mindestens einen Eingangswelle und der beiden Ausgangswellen bilden dabei ein Dreieck, wie es auch der Figur 3 zu entnehmen ist. Entsprechend sind die Figuren 1 und 2 Darstellungen, bei denen die einzelnen Achsen des Getriebes in eine Zeichenebene gelegt worden sind. In Wirklichkeit jedoch liegen die Achsen nicht in einer Ebene, sondern spannen ein räumliches Gebilde (wie beispielsweise in Figur 3 zu sehen) auf.

Figur 1 weiter zu entnehmen sind verschiedene Positionen für eine Parkverriegelung oder für ein Parkrad, durch das eine formschlüssige Verriegelung des Getriebes ermöglicht wird. Mögliche Parkräder bzw. Verriegelungsmöglichkeiten für die Parkfunktion sind durch P1, P2 und P3 dargestellt. Bei der Verriegelung P3 handelt es sich um ein Festrad, das drehfest auf der ersten Ausgangswelle 30 angeordnet ist. Das Zahnrad P3 kann über entsprechende Mittel (Klauen, Sperren etc.) formschlüssig arretiert werden, so dass sich das Abtriebsrad 50 nicht unbeabsichtigt drehen kann.

Das Abtriebsrad 50 selbst kann durch entsprechende Mittel verriegelt werden (siehe P2). Eine andere Möglichkeit besteht darin, eine mit P1 gekennzeichnete Schiebemuffe der Gangschaltkupplung 37 zu arretieren. Die Schiebemuffe P1 ist dabei drehfest mit der ersten Ausgangswelle 30 verbunden und lässt sich in axialer Richtung der ersten Ausgangswelle in der Darstellung der Figur 1 nach links und rechts verschieben. Wird beispielsweise die Schiebemuffe P1 nach rechts verschoben, so wird das Losrad 35 drehfest mit der ersten Ausgangswelle 30 verbunden, wodurch der zweite Vorwärtsgang II eingelegt ist. Unabhängig von der axialen Lage der Schiebemuffe P1 jedoch besteht immer ein Formschluss zwischen Schiebemuffe und erster Ausgangswelle 30 in Drehrichtung. Ist daher die Schiebemuffe P1 in Drehrichtung verriegelt, so gilt dies dann auch für die erste Ausgangswelle 30 und somit für das Ringrad 50.

Figur 2 zeigt schematisch ein weiteres Doppelkupplungsgetriebe, welches dem Doppelkupplungsgetriebe der Figur 1 ähnelt. Entsprechend sei auf die Ausführungen zu Figur 1 hingewiesen.

Beim Doppelkupplungsgetriebe der Figur 2 liegt die Zahnradpaarung, bestehend aus dem Festrad 12 und dem Losrad 42 auf der zweiten Ausgangswelle 40 in einer Ebene, die in axialer Richtung von den Gangschaltkupplungen 36, 46 weiter entfernt liegt als die Ebene, in der die Zahnräder 11, 32 liegen. Somit hat sich gegenüber dem Getriebe der Figur 1 in axialer Richtung gesehen die Reihenfolge der Festräder 11, 12 geändert. Das Doppelkupplungsgetriebe der Figur 2 weist aber wie das Doppelkupplungsgetriebe der Figur 1 vier Gangschaltkupplungen 36, 37, 46, 47 auf, die jeweils als Doppelgangschaltkupplungen ausgelegt sind und die drehfeste Verbindung zweier axial benachbarter Losräder ermöglichen können. Jede Ausgangswelle 30, 40 trägt dabei zwei Gangschaltkupplungen. Zwischen zwei Gangschaltkupplungen einer Ausgangswelle sind dabei zwei Losräder angeordnet, die jeweils Teil einer Abhängigkeit sind. Festräder auf den Ausgangswellen kämmen mit einem Abtriebsrad.

Figur 3 zeigt im Querschnitt schematisch die Achsen der Wellen einer weiteren Ausführung eines Doppelkupplungsgetriebes. Die Achsen der Eingangswellen 10, 20, der ersten Ausgangswelle 30 und der zweiten Ausgangswelle 40 spannen dabei ein Dreieck auf. Der Achsabstand zwischen den Eingangswellen 10, 20 und der ersten Ausgangswelle ist in Analogie zu der Figur 1 mit D_{EA1} gekennzeichnet. Der Abstand D_{EA2} zwischen den Eingangswellen 10, 20 und der zweiten Ausgangswelle 40 ist für verschiedene Getriebevarianten unterschiedlich groß. Figur 3 zeigt des Weiteren, dass die Durchmesser der Ritzel 31, 41 nicht zwangsläufig gleich groß sein müssen. Der Durchmesser des Ritzels 41 der zweiten Ausgangswelle 40 ist dabei größer als der Durchmesser des Ritzels 31 der ersten Ausgangswelle 30. Um nun den Abstand zwischen den Eingangswellen 10,20 und der zweiten Ausgangswelle 40 zu verändern, kann die zweite Ausgangswelle 40 um die Achse des Abtriebsrads 50 gedreht werden. Dabei kann der Durchmesser des Ritzels 41 konstant gehalten werden. Bei einer Lageänderung der zweiten Ausgangswelle 40, die nicht durch Rotation um die Achse des Abtriebsrads 50 erfolgt, sondern beliebiger Natur ist (zum Beispiel rein translatorisch), ist es notwendig, den dann auch geänderten Abstand D_{FDA2} zwischen zweiter Ausgangswelle 40 und Abtriebsrad 50 anzupassen.

### Bezugszeichenliste

- 10: Eingangswelle
- 11: Festrad
- 12: Festrad
- 13: Festrad

- 20: zweite Eingangswelle
- 21: Festrad
- 22: Festrad

- 30: erste Ausgangswelle
- 31: Ritzel
- 32: Losrad
- 33: Losrad
- 34: Losrad
- 35: Losrad
- 36: Gangschaltkupplung
- 37: Gangschaltkupplung

- 40: zweite Ausgangswelle
- 41: Ritzel
- 42: Losrad
- 43: Losrad
- 44: Losrad
- 45: Losrad
- 46: Gangschaltkupplung
- 47: Gangschaltkupplung

- 50: Abtriebsrad
- 51: Differential
- 52: Achse

- 60: Zwischenwelle
- 61: Festrad
- 62: Festrad

## Patentansprüche

1. Verfahren zur Modifizierung eines Schaltgetriebes für Kraftfahrzeuge, sodass auf der Basis einer ersten Getriebevariante eine zweite Getriebevariante entsteht, wobei beide Getriebevarianten jeweils aufweisen:
a) eine Eingangswelle (10) mit Festrädern (11, 12, 13),
b) eine erste Ausgangswelle (30) sowie eine zweite Ausgangswelle (40), auf denen Losräder (32, 33, 34, 35, 42, 43, 44, 45) angeordnet sind,
- wobei die Losräder (32, 33, 34, 35, 42, 43, 44, 45) auf den Ausgangswellen (30, 40) mit zugeordneten Festrädern (11, 12, 13) auf der Eingangswelle (10) kämmen,
- wobei jedem Losrad (32, 33, 34, 35, 42, 43, 44, 45) eine Gangstufe (R, I bis VII) des Schaltgetriebes zugeordnet werden kann
- wobei zumindest zwei Losräder (33, 43) mit einem gleichen Festrad (13) kämen, wodurch eine Abhängigkeit gebildet is,
**dadurch gekennzeichnet, dass**
ausgehend von der ersten Getriebevariante für die zweite Getriebevariante ein Achsabstand (D_{EA2}) zwischen Eingangswelle (10) und zweiter Ausgangswelle (40) verändert wird, während ein Achsabstand (D_{EA1}) zwischen Eingangswelle (10) und erster Ausgangswelle (30) konstant gehalten wird.

2. Verfahren nach Anspruch 1, **dadurch gekennzeichnet, dass** die Abhängigkeit an der gleichen Position verbleibt.

3. Verfahren nach Anspruch 1 oder 2, **dadurch gekennzeichnet, dass** zumindest einem Losrad (33, 43) der Abhängigkeit für die zweite Getriebevariante eine andere Gangstufe zugeordnet wird.

4. Verfahren nach einem der Ansprüche 1 bis 3, **dadurch gekennzeichnet, dass** beide Getriebevarianten jeweils eine weitere Abhängigkeit aufweisen, die an der gleichen Position verbleibt.

5. Verfahren nach Anspruch 4, **dadurch gekennzeichnet, dass** zumindest einem Losrad (34, 44) der weiteren Abhängigkeit für die zweite Getriebevariante eine andere Gangstufe zugeordnet wird.

6. Verfahren nach einem der Ansprüche 1 bis 5, **dadurch gekennzeichnet, dass** ein Achsabstand (D_{FDA2}) zwischen zweiter Ausgangswelle (40) und einem Abtriebsrad (50), welches mit einem Ritzel (31) auf der ersten Ausgangswelle (30) und einem Ritzel (41) auf der zweiten Ausgangswelle (40) kämmt, konstant gehalten wird.

7. Verfahren nach einem der Ansprüche 1 bis 6, **dadurch gekennzeichnet, dass** für beide Getriebevarianten ein Losrad (32), das einem kleinsten Vorwärtsgang (I) zugeordnet ist, und ein Losrad (35), das einem zweitkleinsten Vorwärtsgang (II) zugeordnet, auf der ersten Ausgangswelle (30) sitzen.

8. Verfahren nach einem der Ansprüche 1 bis 7, **dadurch gekennzeichnet, dass** die zweite Getriebevariante einen größeren Achsabstand (D_{EA2}) zwischen Eingangswelle (10) und zweiter Ausgangswelle (40) als die erste Getriebevariante aufweist, wobei bei der zweiten Getriebevariante dem in der einen Abhängigkeit befindlichen Losrad (43) auf der zweiten Ausgangswelle (40) ein höchster Vorwärtsgang zugeordnet wird, während bei der ersten Getriebevariante dem in der einen Abhängigkeit befindlichen Losrad (43) auf der zweiten Ausgangswelle ein anderer Vorwärtsgang zugeordnet ist.

9. Verfahren nach einem der Ansprüche 1 bis 8, **dadurch gekennzeichnet, dass** das Getriebe als Doppelkupplungsgetriebe mit einer zweiten Eingangswelle (20) ausgebildet ist.

10. Verfahren nach Anspruch 9, **dadurch gekennzeichnet, dass** den in der einen Abhängigkeit befindlichen Losrädern nur ungerade oder gerade Vorwärtsgänge zugeordnet werden.

11. Verfahren nach einem der Ansprüche 1 bis 10, **dadurch gekennzeichnet, dass** das Getriebe sieben Vorwärtsgänge aufweist.

12. Verfahren nach Anspruch 11, **dadurch gekennzeichnet, dass** den Losräder der einen Abhängigkeit in der ersten Getriebevariante ein dritter Vorwärtsgang (III) und ein fünfter Vorwärtsgang (V) zugeordnet sind, während bei der zweiten Getriebevariante den Losrädern der einen Abhängigkeit der fünfte Vorwärtsgang (V) und der siebte Vorwärtsgang (VII) zugeordnet werden.

13. Verfahren nach einem der Ansprüche 1 bis 10, **dadurch gekennzeichnet, dass** das Getriebe acht Vorwärtsgänge aufweist.

14. Verfahren nach Anspruch 13, **dadurch gekennzeichnet, dass** in der ersten Getriebevariante den Losräder der einen Abhängigkeit ein dritter Vorwärtsgang (III) und ein fünfter Vorwärtsgang (V) und den Losräder der weiteren Abhängigkeit ein vierter Vorwärtsgang (IV) und ein sechster Vorwärtsgang (VI) zugeordnet sind, während bei der zweiten Getriebevariante den Losrädem der einen Abhängigkeit der fünfte Vorwärtsgang (V) und der siebte Vorwärtsgang (VII) und den Losrädern der weiteren Abhängigkeit ein sechster Vorwärtsgang (VI) und ein achter Vorwärtsgang (VIII) zugeordnet werden.

## Claims

1. Method for modifying a manual transmission for motor vehicles, with the result that on the basis of a first transmission variant a second transmission variant is produced, wherein the two transmission variants each have:
a) an input shaft (10) with fixed gears (11, 12, 13),
b) a first output shaft (30) and a second output shaft (40) on which freely moving gears (32, 33, 34, 35, 42, 43, 44, 45) are arranged,
- wherein the freely moving gears (32, 33, 34, 35, 42, 43, 44, 45) on the output shafts (30, 40) mesh with assigned fixed gears (11, 12, 13) on the input shaft (10),
- wherein each freely moving gear (32, 33, 34, 35, 42, 43, 44, 45) can be assigned a gear stage (R, I to VII) of the manual transmission,
- wherein at least two freely moving gears (33, 43) mesh with the same fixed gear (13), as a result of which a dependence is formed,
**characterized in that**
an axle base (D_{EA2}) between the input shaft (10) and the second output shaft (40) for the second transmission variant is changed on the basis of the first transmission variant, while an axle base (D_{EA1}) between the input shaft (10) and the first output shaft (30) is kept constant.

2. Method according to Claim 1, **characterized in that** the dependence remains at the same position.

3. Method according to Claim 1 or 2, **characterized in that** another gear stage is assigned to at least one freely moving gear (33, 43) of the dependence for the second transmission variant.

4. Method according to one of Claims 1 to 3, **characterized in that** each of the two transmission variants has a further dependence which remains at the same position.

5. Method according to Claim 4, **characterized in that** another gear stage is assigned to at least one freely moving gear (34, 44) of the further dependency for the second transmission variant.

6. Method according to one of Claims 1 to 5, **characterized in that** an axle base (D_{FDA2}) between a second output shaft (40) and an output gear (50) which meshes with a pinion (31) on the first output shaft (30) and a pinion (41) on the second output shaft (40) is kept constant.

7. Method according to one of Claims 1 to 6, **characterized in that** for both transmission variants a freely moving gear (32), which is assigned to a smallest forward gear speed (I), and a freely moving gear (35), which is assigned to a second-smallest forward gear speed (II) is seated on the first output shaft (30).

8. Method according to one of Claims 1 to 7, **characterized in that** the second transmission variant has a larger axle base (D_{EA2}) between the input shaft (10) and the second output shaft (40) than the first transmission variant, wherein in the case of the second transmission variant a highest forward gear speed is assigned to the freely moving gear (43) in the one dependence, on the second output shaft (40), while in the case of the first transmission variant another forward gear speed is assigned to the freely moving gear (43) which is in the one dependence, on the second output shaft.

9. Method according to one of Claims 1 to 8, **characterized in that** the transmission is embodied as a double-clutch transmission with a second input shaft (20).

10. Method according to Claim 9, **characterized in that** only uneven or even numbered forward gear speeds are assigned to the freely moving gears in one of the dependences.

11. Method according to one of Claims 1 to 10, **characterized in that** the transmission has seven forward gear speeds.

12. Method according to Claim 11, **characterized in that** in the first transmission variant a third forward gear speed (III) and a fifth forward gear speed (V) are assigned to the freely moving gears of the one dependence while in the case of the second transmission variant the fifth forward gear speed (V) and the seventh forward gear speed (VII) are assigned to the freely moving gears of the one dependence.

13. Method according to one of Claims 1 to 10, **characterized in that** the transmission has eight forward gear speeds.

14. Method according to Claim 13, **characterized in that** in the first transmission variant the third forward gear speed (III) and a fifth forward gear speed (V) assigned to the freely moving gears of the one dependence, and a fourth forward gear speed (IV) and a sixth forward gear speed (VI) are assigned to the freely moving gears of the further dependence, while in the case of the second transmission variant the fifth forward gear speed (V) and the seventh forward gear speed (VII) are assigned to the freely moving gears of the one dependence, and a sixth forward gear speed (VI) and an eight forward gear speed (VIII) are assigned to the freely moving gears of the further dependence.

## Revendications

1. Procédé de modification d'une boîte de vitesses manuelle pour véhicules automobiles, de façon à produire, sur la base d'une première variante de transmission, une deuxième variante de transmission, les deux variantes de transmission comprenant respectivement :
a) un arbre d'entrée (10) pourvu de roues fixes (11, 12, 13),
b) un premier arbre de sortie (30) ainsi qu'un deuxième arbre de sortie (40), sur lesquels sont disposées des roues folles (32, 33, 34, 35, 42, 43, 44, 45),
- les roues folles (32, 33, 34, 35, 42, 43, 44, 45) sur les arbres de sortie (30, 40) s'engrenant avec des roues fixes associées (11, 12, 13) sur l'arbre d'entrée (10),
- un rapport de vitesse (R, I à VII) de la boîte de vitesses manuelle pouvant être associé à chaque roue folle (32, 33, 34, 35, 42, 43, 44, 45),
- au moins deux roues folles (33, 43) s'engrenant avec une même roue fixe (13), de sorte qu'une dépendance soit formée,
**caractérisé en ce**
**qu'**à partir de la première variante de transmission, un entre-axe (D_{EA2}) entre l'arbre d'entrée (10) et le deuxième arbre de sortie (40) est modifié pour la deuxième variante de transmission, tandis qu'un entre-axe (D_{EA1}) entre l'arbre d'entrée (10) et le premier arbre de sortie (30) est maintenu constant.

2. Procédé selon la revendication 1, **caractérisé en ce que** la dépendance demeure à la même position.

3. Procédé selon la revendication 1 ou 2, **caractérisé en ce qu'**un autre rapport de vitesse est associé à au moins une roue folle (33, 43) de la dépendance pour la deuxième variante de transmission.

4. Procédé selon l'une quelconque des revendications 1 à 3, **caractérisé en ce que** les deux variantes de transmission présentent respectivement une autre dépendance qui demeure à la même position.

5. Procédé selon la revendication 4, **caractérisé en ce qu'**un autre rapport de vitesse est associé à au moins une roue folle (34, 44) de l'autre dépendance pour la deuxième variante de transmission.

6. Procédé selon l'une quelconque des revendications 1 à 5, **caractérisé en ce qu'**un entre-axe (D_{FDA2}) entre le deuxième arbre de sortie (40) et une roue de sortie (50) qui s'engrène avec un pignon (31) sur le premier arbre de sortie (30) et un pignon (41) sur le deuxième arbre de sortie (40) est maintenu constant.

7. Procédé selon l'une quelconque des revendications 1 à 6, **caractérisé en ce que**, pour les deux variantes de transmission, une roue folle (32) qui est associée à un rapport de marche avant le plus petit (I) et une roue folle (35) qui est associée à un deuxième plus petit rapport de marche avant (II) reposent sur le premier arbre de sortie (30).

8. Procédé selon l'une quelconque des revendications 1 à 7, **caractérisé en ce que** la deuxième variante de transmission présente un plus grand entre-axe (D_{EA2}) entre l'arbre d'entrée (10) et le deuxième arbre de sortie (40) que la première variante de transmission et, dans la deuxième variante de transmission, un rapport de marche avant le plus élevé étant associé à la roue folle (43) se trouvant dans l'une des dépendances sur le deuxième arbre de sortie (40), tandis que, dans la première variante de transmission, un autre rapport de marche avant est associé à la roue folle (43) se trouvant dans l'une des dépendances sur le deuxième arbre de sortie.

9. Procédé selon l'une quelconque des revendications 1 à 8, **caractérisé en ce que** la transmission est réalisée sous forme de transmission à double embrayage comprenant un deuxième arbre d'entrée (20).

10. Procédé selon la revendication 9, **caractérisé en ce que** seulement des rapports de marche avant impairs ou pairs sont associés aux roues folles se trouvant dans l'une des dépendances.

11. Procédé selon l'une quelconque des revendications 1 à 10, **caractérisé en ce que** la transmission comprend sept rapports de marche avant.

12. Procédé selon la revendication 11, **caractérisé en ce qu'**un troisième rapport de marche avant (III) et un cinquième rapport de marche avant (V) sont associés aux roues folles de l'une des dépendances dans la première variante de transmission, tandis que, dans la deuxième variante de transmission, le cinquième rapport de marche avant (V) et le septième rapport de marche avant (VII) sont associés aux roues folles de l'une des dépendances.

13. Procédé selon l'une quelconque des revendications 1 à 10, **caractérisé en ce que** la transmission comprend huit rapports de marche avant.

14. Procédé selon la revendication 13, **caractérisé en ce que**, dans la première variante de transmission, un troisième rapport de marche avant (III) et un cinquième rapport de marche avant (V) sont associés aux roues folles de l'une des dépendances et un quatrième rapport de marche avant (IV) et un sixième rapport de marche avant (VI) sont associés aux roues folles de l'autre dépendance, tandis que, dans la deuxième variante de transmission, le cinquième rapport de marche avant (V) et le septième rapport de marche avant (VII) sont associés aux roues folles de l'une des dépendances et un sixième rapport de marche avant (VI) et un huitième rapport de marche avant (VIII) sont associés aux roues folles de l'autre dépendance.
